# EUROPEAN PATENT SPECIFICATION

(11) **EP 1 894 660 B1**
(45) Date of publication and mention of the grant of the patent: **05.10.2011**
(21) Application number: 06119882.6
(22) Date of filing: 31.08.2006
(51) Int. Cl.: B23K 20/04, F28D 1/03, B21D 53/04, B21C 37/08, F28D 9/00

(54) **A method for producing a metal tube by clad rolling at least two profiles to form at least three channels**
Verfahren zur Herstellung eines metallischen Rohres durch Plattieren-Rollen zweier oder mehrerer Profile zum Erzeugen mindestens drei Kanäle
Méthode de fabrication d'un tube métallique par laminage-placage d'au moins deux profilés pour former au moins trois canaux

(43) Date of publication of application: 05.03.2008
(73) Proprietor: Luvata Oy, 02101 Espoo (FI)
(72) Inventor: Irwin, Mark, 724 82 Västerås (SE); Keife, Hans, 722 24 Västerås (SE)
(74) Representative: Reyier, Ann-Mari

(56) References cited:
- GB-A- 1 026 901
- GB-A- 2 188 137
- GB-A- 2 391 296
- JP-A- 61 092 790
- JP-A- 61 189 884
- US-A- 2 607 109
- US-A- 3 384 946
- US-A- 4 274 186
- US-A- 5 942 132

## Description

The present invention relates to a method for producing a metal tube according to the preamble of claim 1 (see, for example, US 3 384 946).

### TECHNICAL FIELD

Metal tubes are used to conduct fluids in various applications. In one application tubes are used to allow an exchange of heat between two fluids. This is useful for example in heat exchangers and heat pumps such as air conditioners. In one application one fluid is conducted inside the metal tube, while another fluid surrounds the tube. In order to ensure an efficient heat transfer and to lower the fall of pressure for the surrounding fluid when it flows across the tubes, such a metal tube is preferably substantially flat. Thus a large surface area for heat conduction is also established.

In order for a heat pump to have a high performance high pressures are needed to achieve an efficient heat pump cycle. Throughout the heat pump cycle the fluid changes its state between being a liquid and a gas or a mixture thereof. In order to allow high pressures it is known to use multi-channel tubes comprising several parallel channels. Thus a large internal pressure may be combined with large fluid flow and a large surface area.

Examples of such multi-channel tubes are shown in the patent documents US 6,371,201 and US 6,343,645. One problem with multi-channel tubes is that they are difficult to manufacture. Multi-channel tubes can be manufactured by soldering metal profiles to each other. Soldering however is a slow and expensive process. Multi-channel tubes may also be produced by extrusion, but only in softer metals such as aluminium, while it is neigh to impossible to extrude multi-channel tubes in copper or steel. In order to improve the efficiency of heat exchangers it is desirable to use materials with higher strength and high heat conductivity, hence extrusion cannot be used for high performance multi-channel tubes.

US3384946 discloses a method of producing a metal tube comprising a plurality of channels by means of clad-rolling a first and a second metal sheet between mandrels.

### SUMMARY OF THE INVENTION

One object of the present invention is to achieve an efficient production of a metal tube.

According to the invention this is achieved with a method of producing a metal tube according to claim 1.

By producing the metal tube, having three or more channels by clad-rolling at least a first and a second portion of at least two metal profiles to each other, so that seals are formed, which both seal the channels and hold the two or more metal profiles together, an efficient production of the metal tube is achieved. Clad-rolling can be efficient in many ways. Clad-rolling can be performed at great speed, and thus the productivity of the metal tube production is high. Clad-rolling is also simple to use even for hard metals, such as copper, which is a preferred material for metal tubes for use in heat exchangers. Furthermore clad-rolling is relatively inexpensive and the equipment needed for clad-rolling is also relatively inexpensive. Clad-rolling may be a cold process, in difference to for example extrusion or soldering, which means that the characteristics of the material may be more easily controlled. Furthermore, no additional internal structure is needed, either for support or in order to form channels.

Preferably the metal profiles are provided in the form of metal strips, which are fed into the clad-rolling mill. These strips may be provided in the form of feeding rolls and may be very long. Preferably the first and second portions of the metal profiles are then clad-rolled to each other in a continuous operation. A continuous process has the advantages that the process is fast and has high productivity.

Any number of metal profiles may be used to form the metal tube, ranging from two, four or more profiles. The metal tube may also comprise additional metal profiles that are not clad-rolled, but instead may be joined with the other profiles by other processes, such as soldering. The metal profiles may in themselves be produced in any suitable process, such as extrusion, pressing or rolling of a metal strip. Preferably the tube comprises a first and a second profile comprising the first and second portions, respectively.

In one example the clad-rolled seals extend in parallel with and along the main part of the length of the channels. The clad-rolled portions thus seal the channels along the main part of the length of the channels. Preferably, the seals and the channels extend along the entire length of the metal profiles. Preferably, the first and second portions and the seals are flat. Long and straight portions are very easily clad-rolled and hence long channels may efficiently be produced. Furthermore, the material closest to the clad-rolled portions may become deformed when the portions are clad-rolled, so that the deformed material automatically forms said channels.

In one embodiment the invention comprises forcing the material of the metal profiles apart, so that channels are formed from the metal profiles. Preferably the channels are formed between the first and the second seal. In one embodiment the material of the metal profiles are forced apart by the stress induced from the clad-rolling of the seals. In another embodiment the material of the metal profiles are forced apart by introduction of a pressurized gas between the metal profiles. In another embodiment the material of the metal profiles are forced apart by introducing a mandrel or some other solid object in between the metal profiles before, during and/or after the clad-rolling.

In one example of the invention a tube is produced comprising at least three channels for conduction of a fluid. Preferably the at least two metal profiles are arranged to form a plurality of channels for conduction of a fluid. Preferably the channels are adjacent, adjoined, and arranged in parallel with each other. By arranging several channels in parallel a higher pressure and a higher velocity can be allowed for the same cross sectional area of the tube. Furthermore the channels are preferably arranged side to side, so that the combined tube is substantially flat. Thus the tube is well adapted for use in high performance heat exchange devices. Preferably the tube is produced so that the tube comprises clad-rolled seals between two channels, which clad-rolled seals separate and seal the channels from each other. The clad-rolled seals between the channels also hold the metal profiles together and hence strengthen the tube, so that the tube may contain higher fluid pressures. Preferably the metal tube is a multi-channel tube adapted for use in a high performance heat exchanger.

Preferably the rolls for clad-rolling each comprises at least four protrusions adapted to jointly clad-roll the two or more metal profiles to form the clad-rolled seals. Preferably the protrusions are arranged along the circumference of the mantle surface of the cylinder shaped clad-roll. In one embodiment the protrusions are disrupted for a short distance in order to provide openings between two channels or openings inside a same channel provided with strengthening seals.

According to one embodiment the invention transferring a second form of energy to the first and second portions during the clad-rolling of the first and second portions. By transferring a second form of energy to the material of the first and second portions during the clad-rolling it is easier to form good seals between the portions. Thus the speed may be increased and/or harder metals may be clad-rolled. The second form of energy may be thermal energy, mechanical energy, for example sonic vibrations, electromagnetic energy in the form of light or IRradiation or any other form of suitable energy which can be directed towards the portions.

According to a further embodiment of the invention the invention comprises shaping a section of at least two metal profiles to bulge, in order to form a channels from the bulging section. Thus a greater control of the shape of the channels is achieved. Preferably the shaping is performed before the clad-rolling. When clad-rolling the profiles the clad-rolling affects the shape of the profiles. By pre-shaping the profiles the effect from the clad-rolling takes place in the desired direction.

In one embodiment the shaping comprises rolling the at least two metal profiles so that the at least two metal profiles receive bulging sections. Preferably the shape rolling is coordinated with the clad-rolling, so that the shape rolling is performed at substantially the same speed. Preferably the at least two metal profiles are shaped by rolling the at least two metal profiles between a first and a second shaping roll. Preferably the first shaping roll squeezes the bulging sections into a groove arranged in the rolling surface of the second shaping roll. Preferably the bulging section forms one half of said channel, wherein the other half of the channel is formed by a second, corresponding bulging section of a second metal profile. Preferably the metal tube thus comprises a first profile comprising a section bulging in one direction and a second profile comprising a section bulging in the opposite direction, wherein the first and the second metal profiles are arranged so that the bulging sections jointly form channels. Preferably the bulging sections bulges in a direction perpendicular to the length direction of the channel.

According to one embodiment of the invention at least one wall portion of the bulging sections is flattened, so that the channels comprise a flattened surface. Preferably the flattening is performed after the clad-rolling. By flattening the wall portion a larger surface area is obtained, so that the heat transfer capacity is increased. Preferably the flattening comprises rolling the wall of the bulging sections. Preferably the flattening of the wall of the bulging sections is performed after the clad-rolling, since the clad-rolling may affect the shape of the bulging sections. Preferably the flattening rolling process is performed at the same speed as the clad-rolling and/or a shape rolling, so that the rolling processes are performed at the same speed in a coordinated manner.

According to one embodiment of the invention the invention comprises heating the metal profiles. By heating the metal profiles the profiles become more ductile and can more easily be processed. The risk that cracks forms in the metal during processing and the amount of cold working is decreased. Alternatively the heating of the metal profiles may anneal the metal in the tube, so that the effect from cold working is reduced. Preferably the metal profiles are heated to a temperature of at least 100 °C, preferably at least 200 °C, and most preferably to a temperature of at least 500 °C. Preferably the metal profiles are heated to a temperature smaller than or equal to 1000 °C.

In one embodiment the metal profiles are heated in advance of the clad-rolling or in connection with the clad-rolling. By heating the profiles in connection with the clad-rolling strong clad-rolled seals can be obtained with less compressive force during the clad-rolling, that is with less reduction of the material thickness in the seals. Hence the material next to the seals will be subjected to less thinning and weakening.

In one embodiment the metal profiles are heated after the clad-rolling. Preferably the metal profiles are soft annealed. The clad-rolled seals will then be strengthened by diffusion bonding across the portions forming the seals.

In one embodiment the metal profiles are heated before the winding of the tube onto a storage reel. The elevated temperature make the material of the tube more ductile, allowing easier winding of the tube with less risk for introducing cracks or damages to the tube.

In one embodiment the metal tube is heated before rolling the tube onto a reel for storage.

According to one embodiment the tube is formed by a material comprising copper. Preferably the material comprises at least 50 % (w/w) copper, most preferably at least 98% Cu. According to one embodiment the material is a brass comprising at least 70% Cu.

### DESCRIPTION OF THE DRAWINGS

The invention is now to be described in greater detail as a number of non-liming examples of the invention and with reference to the attached drawings.
- Fig. 1a-c: show one example of a metal tube, its use and its production.
- Fig. 2a-b: show a variation of a metal tube and a method for producing the metal tube, both aspects not covered by the present invention.
- Fig. 3: shows another example of a metal tube not covered by the invention and its method of production.

### DETAILED DESCRIPTION

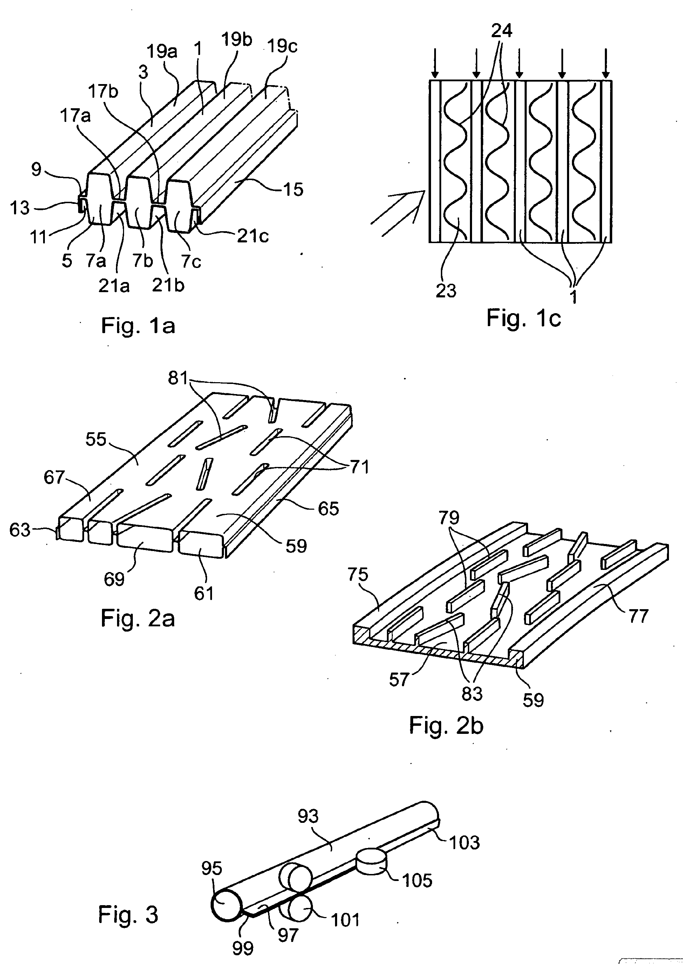

In fig. 1a a metal tube 1 is shown. The metal tube 1 comprises a first metal profile 3 and a second metal profile 5. The first 3 and the second metal profiles 5 are arranged to form at least one channel for conduction of a fluid. In this example the metal profiles 3, 5 are adapted to form three channels 7a, 7b, 7c for conduction of a fluid. The channels 7a-c are arranged in parallel with each other and extend along the length of the metal profiles. Thus the metal tube comprises long channels for conduction of the fluid. If a shorter tube is needed the tube may be cut. In this example the channels are adapted to conduct the same fluid and with the same direction of flow, but in another example the channels may conduct different fluids. In this example the metal tube 1 consists of two metal profiles only. In another example the metal tube may comprise two or more metal profiles. Similarly, the metal tube may comprise three or more channels.

The first profile 3 comprises a first substantially flat portion 9 extending in parallel with and alongside the first channel 7a. The second profile 5 comprises a corresponding, second portion 11 extending in parallel with and alongside the first channel 7a. According to the invention the first 9 and the second portions 11 are clad-rolled to each other so that the first 9 and the second portions 11 are joined with each. That the first 9 and the second portions 11 are clad-rolled mean that the first 9 and the second portions 11 have been jointly rolled with such a compressive force that the material of the first 9 and second portions 11 has joined. The clad-rolled portions 9, 11 jointly form a clad-rolled seal 13, which holds the first 3 and the second metal profiles 5 together and seals one side of the first channel 7a, in this example along the length of the channel.

In this example the metal profiles 3, 5 also comprises portions arranged alongside the third channel 7c, which portions are clad-rolled, so that the portions are joined to form a second seal 15, extending in parallel with and along the length of the third channel 7c. The second seal 15 thus holds the metal profiles 3, 5 together at the other side of the channels. The channels 7a-c are hence enclosed by the first and the second, outer seals 13, 15.

The first 3 and the second metal profiles 5 are thus joined and held together by clad-rolled seals. Clad-rolling is a fast and efficient method of production. Thus the tube can be produced more efficiently than if the metal profiles had to be joined by some other method such as by soldering. During the clad-rolling the thickness of the first and the second portions is reduced. In this example the thickness is reduced to 80% of the original thickness,

In this example, the metal tube 1 is also provided with a third 17a and a fourth 17b, clad-rolled seals. The third clad-rolled seal 17a is arranged between the first 7a and the second channels 7b, and fourth clad-rolled seal is arranged between the second 7b and third channels 7c. The third 17a and the fourth 17b inner, clad-rolled seals seal and separate the channels from each other. The inner seals 17a-b also hold the metal profiles 3, 5 together providing the tube 1 with a strengthened pressure containing capacity.

In order to form said channels the first metal profile 3 comprises three sections 19a-c extending along the length of the tube and arranged to bulge in a direction perpendicular to the length of the tube. The bulging sections 19a-c thus forms one half of said channels 7a-c. Similarly the second metal profile 5 comprises three bulging sections 21a-c extending along the length of the tube and arranged to bulge in a direction opposite to the first direction. The bulging sections 21 a-c thus forms the other half of said channels 7a-c. The metal profiles 3, 5 are joined by the clad-rolled seals 13, 15, 17a-b, so that the bulging sections 19a-c, 21a-c are aligned with each other and jointly form said channels 7a-c.

In this example the metal tube 1 is a multi-channel tube adapted for use in a high performance heat pump 23, shown in fig. 1c. In this example the tube is adapted for use in a vehicle air conditioner, in which a fluid is conducted inside the tube, while air circulates outside the tubes to remove heat from the fluid. The high-performance heat pump comprises several, flat tubes 1 arranged in parallel and spaced apart, and several corrugated metal fins 24 arranged between the tubes 1 to increase the effective surface area between the tubes and the surrounding air. Since the tubes 1 are flat, the tubes present a lower resistance when the air flows around the tubes 1 and through the heat pump 23. The air flow is represented by the large arrow..

In order for the heat pump 23 to have a high performance, that is to provide a high heat transfer in relation to its size, it is required that high pressures are allowed, in order to bring the fluid through an efficient heat pump cycle. Throughout the heat pump cycle the fluid may change state between being a liquid, a gas and a mixture of liquid and gas. The maximum pressure needed is dependent on the nature of the fluid. For better efficiency of the heat pump cycle high pressures are needed. Additionally, the surface area of the tube 1 needs to be large. A circular tube may easily be prepared to withstand high pressures. However, a circular tube has a low surface area in relation to its internal volume. A flat tube however has a large surface area but a lower resistance to high pressures.

In this example the tube 1 therefore comprises several parallel channels arranged side by side. The achieved multi-channel tube 1 is substantially flat, while having several smaller channels with substantially circular cross-section. In this example the channels are adapted to have a diameter less than or equal to 5 mm, preferably less than or equal to 2 mm. Thus the tube may contain an inner pressure of about 100 MPa. In this example the inner diameter of the channels is equal to or less than 1 mm, and the tube is manufactured in copper, which is a high strength material. The tube is then able to sustain an inner pressure of more than 100 MPa. With even smaller channels the tube should be able to withstand pressures up to 400 MPa. Thus the performance of the heat pump can be increased substantially.

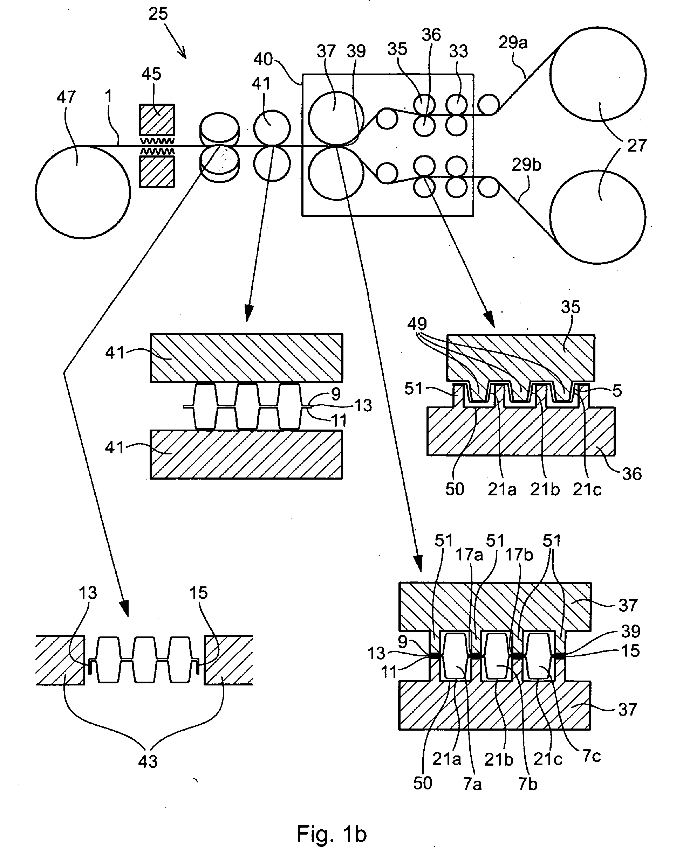

In fig. 1b a rolling mill 25 adapted to perform a method for production of the metal tube 1 in fig. 1a according to the invention is shown. The rolling mill 25 comprises two feeding rolls 27, adapted to feed a first 29a and a second metal profiles 29b, respectively, into the rolling mill 25. The metal profiles 29a, 29b are provided in the form of long metal strips rolled onto the feeding rolls 27. The rolling mill 25 also comprises two guiding rolls 31 adapted to guide the path of the metal strips, four brush rolls 33 arranged two by two to brush the surface of the metal profiles 29, two shaping rolls 35 adapted to shape sections of the metal strips 29, and two clad-rolls 37 adapted to clad-roll said portions and sections of the two metal profiles 29a, 29b to each other. The rolling mill 25 further comprises flattening rolls 41 adapted to flatten the bulging sections of the metal profiles in order to increase the surface area of the channels. The clad-rolling mill 25 further comprises a housing 40, a heating device 45 and a reel 47 adapted to receive the finished metal tube.

The clad-rolling mill 25 and the method for producing the metal tube are now to be described in greater detail.

In a first step the method for producing the metal tube comprises feeding the metal profiles, in the form of metal strips, into the rolling mill 25 from said feeding rolls 27, by un-winding the metal profiles from the feeding rolls 27. The feeding rolls 27 may have very long metal strips wounded onto them, and thus the production of the metal tube is considered continuous. Furthermore the feeding rolls 27 may be changed while still in operation, by providing and readying a third and fourth feeding roll. The time of change between two successive metal strips can thereby be substantially reduced.

In a second step the method for producing the metal tube comprises guiding the metal profiles to its path with the guiding rolls 31. In this example the metal profiles are guided to the brush rolls 33, but in practice the clad-rolling mill may contain any number of guiding rolls, including no guiding rolls at all, for guiding the metal profiles through the mill 25.

In a third step the method comprises brushing the metal profiles with the brushing rolls 33. The brush rolls 33 comprise brushes arranged on the surface of the rolls. The brush rolls 33 are adapted to brush off dirt, and oxide layers from the metal profiles. An oxide layer on the surface of the metal profile may interfere with the clad-rolling process and decrease the strength of the clad-rolled seal.

In a fourth step, the method comprises protecting the metal profiles from oxygen by providing a protective atmosphere. In this example a protective atmosphere comprising nitrogen is provided. The protective atmosphere is contained inside the housing 40. In this example the housing 40 encloses the brush rolls 33 as well as the shaping rolls 35 and clad-rolls 37.

In a fifth step, the method comprises shaping the metal-profiles 3, 5. In this example the method comprises shaping the metal-profiles to form bulging sections 21a, 21 b, 21 c adapted to form the channels of the metal tube. The first and second shaping rolls 35, 36 are adapted to bend the metal profiles 29, so that the metal profiles receives three bulging sections 19a-c, which are to form said channels. The first shaping rolls 35 therefore comprise three protrusions 51 arranged on and along the circumference of the shaping rolls 35. The three protrusions 51 are adapted to bend the bulging sections 19a-c of the metal strip.

The second shaping rolls 36 are provided with grooves 50 and protrusions 51 forming the walls of said grooves 50, which protrusions 51 and grooves 50 are arranged on and along the circumference of the shaping rolls 36. In this example the protrusions 51 of the first shaping rolls 35 fit into the grooves 50. In the shaping step the sections 19a-c of the metal profiles are pressed down into the grooves 50 by the protrusions 51 to form said bulging sections 19a-c, while the other portions of the metal profiles remain on top of the protrusions 51.

Since the metal profiles are formed by rolling, the channels are formed in a longitudinal direction of the metal profiles and in parallel with the feeding direction of the metal profiles. Hence, very long channels can easily be produced with the clad-rolling mill 25 and the method according to the invention.

In a sixth step, the method comprises arranging the metal profiles to form at least one channel and feeding the metal profiles into the clad-rolling mill. The sixth step also comprises clad-rolling at least a first 9 and a second portion 11 of the first 3 and the second metal profiles 5 to each other. The first 9 and the second portions 11 are thus joined with each other, wherein the first 9 and the second portions 11 form a seal 13 that holds the first 3 and the second metal profiles 5 together and seals at least part of the channel. In this example the method also comprises clad-rolling a second seal 15 on the other side of the channels. In the sixth step, the method also comprises clad-rolling a seal 17a between two channels 7a, 7b, which seal separates and seals the channels from each other. In this example the clad-rolling mill is adapted to clad-roll two inner seals 17a, 17b located in between and separating the three different channels from each other.

The clad-rolling rolls 37 are arranged to form a clad-rolling nip 39. The clad-rolling rolls 37 comprises protrusions 51 arranged so that the distance between the protrusions 51 on the two opposite clad-rolls 37 in the nip 39 correspond to a desired material thickness for the first and second metal profiles in said seals 13, 15, 17a, 17b. According to the present invention the distance between the protrusions 51 of the two different rolls 37 is between 60-80% of the original thickness of the first and second portions of the profiles taken together. Hence the material thickness of the clad-rolled seals is reduced to about 20-40% of the original thickness of the portions, which are to be clad-rolled. When the profiles are fed into the nip 39, the profiles remain on the surface of the protrusions 51, wherein the protrusions 51 compress the material of the portions towards each other. With the level of compression provided by the clad-rolls, arranged at the distance mentioned above, the portions are clad-rolled to each other so that the portions are joined in said seal with a sufficient strength and without weakening the material close to the seals due to excessive thinning.

The width of the tip of the inner protrusions 51 is preferably smaller than 3 mm, preferably smaller than 2 mm and most preferably smaller than 1 mm. In this example the width of the tip of the inner protrusions 51 is 0,5 mm. The width of the inner seals 17a, 17b are correspondingly preferably smaller than 3 mm, preferably smaller than 2 mm and most preferably smaller than 1 mm. In this example the width of the inner seals 17a, 17b are 0,5 mm. Thus the total width of the tube is small, so that the heat transfer efficiency of the tube relative to its size is high. Preferably the width of the tip of the inner protrusions 51 is also larger than 0,3 mm, so that the width of the inner seals 17a, 17b are larger than 0,3 mm. The inner seals 17a, 17b are then sufficiently wide to seal and provide strength to the channels.

The width of the tip of the outer protrusions 51 is on the other hand preferably larger than 1 mm, preferably larger than 2 mm, in order to provide wider outer seals 13, 15 which provide higher strength, since the outer seals 13, 15 enclose the channels 7a-c and the tube 1. These sizes will of course differ depending on application and selected fluid to be conducted inside the tube.

Since the metal profiles are held together and said channels are sealed by clad-rolling the seals 13, 15, 17a, 17b, the seals are formed along the length of the feeding direction of the tube, in this example along the length of the bulging sections and thus along the length of the channels 7a-c. A very long multi-channel tube may therefore efficiently be produced with the clad-rolling mill 25 and the method according to the invention.

In the sixth step the method also comprises transferring a second form of energy to the first and second portions during the clad-rolling of the first and second portions. By transferring a second form of energy to the material of the first and second portions during the clad-rolling the efficiency of the clad-rolling increases. In this example the clad-rolling mill comprises a sonic device 42, adapted to transfer ultra sonic waves to the first and second portions during the clad-rolling. Alternatively, the clad-rolling mill may comprise devices adapted to transfer a second form of energy in the form of heating coils to transfer thermal energy, vibrators to transfer mechanical energy, or radiators to transfer electromagnetic energy, for example an IR-emitter.

In a seventh step the method comprises flattening the bulging sections of the metal profiles with flattening rolls 41. The flattening of the bulging sections 19a-c, 21a-c, and thus the flattening of one wall section of the channels, in this case the top and bottom of the channels, increases the surface area of the channels. Furthermore the general appearance of the tube becomes flatter so that the metal tube more easily may be fit to use in a traditional vehicle heat exchanger.

In an eight step the method comprises bending the outer seals 13, 15 with bending rolls 43. The bending rolls 43 are adapted to bend the first 13 and the second seals 15 towards the sides of the channels, or the bulging sections. This decreases the risk that the seals 13, 15 cut someone or something involuntarily.

In a ninth step the method comprises heating the metal tube with a heating device 45. The heating device 45 is adapted to heat the metal profiles to an appropriate temperature dependent on the purpose of the heating. In this example the heating device is adapted to heat a copper metal profile in order to anneal the copper material to decrease the action from cold-working. By heating the metal profiles the metal profiles also become more flexible and can more easily be rolled in a tenth and concluding step.

In the tenth step the method comprises rolling the semi-finished metal tube onto the reel 47. The reel 47 is adapted to receive and store the metal tube wound around the reel 47. In another example the metal tube may instead be cut into desired pieces of length, and thereafter be transported to and stored in boxes or other forms of storage bins.

In fig. 2a an example of a metal tube 55, not covered by the present invention, is shown and in fig. 2b an example of a section of the surface 57 of a clad-rolling roll 59 for producing the metal tube in fig. 2a is shown.

The metal tube 55 comprises two metal profiles 59, 61 comprising portions clad-rolled to each other to form a first 63 and a second outer seal 65. The metal tube also comprises a bulging section 67 arranged to form a channel 69 along the length of the tube 55. The outer seals 63, 65 are arranged to hold the metal profiles together and to seal the channel 69.

The metal tube 55 further comprises clad-rolled inner sections forming inner seals 71 located inside the region of the channel 69. The inner seals 71 strengthen the channel 69 so that the channel 69 may contain higher fluid pressures and fluid flows. In an alternative way of description one could likewise argue that the tube comprises three channels 69 sealed and separated from each other by the clad-rolled seals 71, and that the seals 71 are provided with openings allowing communication between the channels 69. The fact that the tube 55 is provided with only one strengthened channel 69, or alternatively, three communicating channels 69, allow a fluid flow in a lateral direction in the tube. This gives the advantage that any temperature gradients developed in a lateral direction of the tube may be decreased by the lateral fluid flow. The lateral fluid flow is enhanced in that the fluid usually is a mixture of both a liquid and a gas. In this example some of the inner seals 81 are arranged at an angle relative to the length direction of the tube. Hence the fluid is pressed sideways which increases its lateral flow and decreases the temperature gradient.

In fig. 2b a section of the surface 57 of the clad roll 59 for producing the metal tube 55 is shown. The surface 57 comprises a first and a second outer protrusion, 75 and 77, arranged to clad roll the outer seals 63 and 65, respectively. The surface 57 also comprises straight inner protrusions 79 arranged to clad-roll the straight inner seals 71, and angled inner protrusions 83, arranged to clad-roll the angled inner seals 81.

In fig. 3 another example of a metal tube 91 and a rolling mill and a method of producing the metal tube 91, all aspects not covered by the present invention is shown. The metal tube 91 comprises only one metal profile which comprises a bulging section 93 adapted to form a channel 95, and a first 97 and a second portion 99 clad-rolled to each other.

In a first step the method of producing the metal tube 91 comprises bending the metal profile so that the first 97 and second portions 99 are close to each other. In a second step the method comprises feeding the first 97 and second portions 97 into a clad-rolling mill 101. In a third step the method comprises clad-rolling the first 97 and second portions 99 to each other, in order to join the portions 97, 99 to each other in a seal 103 for sealing the channel 95. In a fourth step the method comprises bending the clad-rolled seal 103 with a bending roll 105, so that the seal 103 is arranged close to the body of the tube 91. Thus the risk that anyone gets cut on the seal 103 decreases

The detailed description above should be regarded as no more than non-limiting but preferred examples of the invention and for illustrative purpose only. The invention may be varied and modified by a man skilled in the art in many ways.

For example, the heating step may be carried out before or at the same time as the clad-rolling. The clad-rolls may for example be provided with heating coils heating the metal profiles during the clad-rolling. The metal profiles need not be shaped, but the bulging sections may in some instances form automatically when clad-rolling the metal profiles. Furthermore, the metal profiles may be provided with bulging or protruding sections even before the metal profiles are fed into the rolling mill, for example, the metal profiles may be purchased with an already suitable shape. The different rolls may be adapted to form nips between rolls of different kinds. For example, the brush roll may form a nip with the clad-roll and hence brush the metal strip while the metal strip bear against the surface of the clad-roll. Hence the metal strip is only brushed on one side (the side that will face and be joined with the other metal strip) and the bulging sections of the metal strip will be forced into the grooves arranged in the clad-roll by the brush. Nips may also be formed between the other rolls, such as between the brush roll and the shaping roll, or between a shaping roll and the clad-roll, etc.

The metal tube is not limited to comprise clad-rolled metal profiles, but the tube may also comprise other profiles that may be soldered to the tube. For example, the tube in fig 1a may be provided with a housing so that extra channels are formed between the outsides of the channels 7a-c and the housing. The distance between the channels 7a-c, that is the width of the inner seals 17a-b, may then be increased to provide larger outer channels.

The metal tube may be produced in aluminium, zinc, tin, steel, stainless steel, copper, alloys thereof, or any other metal, which can be clad-rolled. Preferably the metal tube is made in copper since copper has high strength and high thermal conductivity. The metal tube may be adapted to conduct fluids such as freon, carbondioxide, ammoniumbased fluids, or any other fluid suitable for heat pumps. The choice of fluid depends on the desired temperatures involved, and is known in the art of heat pumps.

The invention is not limited to the examples shown but may be varied within the scope of the following claims.

## Claims

1. A method of producing a metal tube comprising three or more channels (7a-c) for conduction of a fluid, wherein the method comprising:
- arranging at least two metal profiles (3, 5), wherein each metal profile (3, 5) comprises a plurality of flat portions (9, 11) and a plurality of bulging sections (19a-c, 21 a-c), each bulging section (19a-c, 21 a-c) extends a certain height from the flat portions (9, 11), so that the flat portions (9) of a first metal profile (3) are directed towards the flat portions (11) of a second metal profile (5), and so that the bulging sections (19a-c, 21a-c) form said channels (7a-c), wherein the flat portions (9, 11) have a certain original thickness,
- feeding the two metal profiles (3, 5) into a clad-rolling mill,
- clad-rolling the flat portions (9, 11) of the two metal profiles (3, 5) by means of two opposite clad-rolling rolls (37), each clad-rolling roll (37) comprises ridges and protrusions (51), each protrusion (51) protrudes a certain length from the respective ridge, **characterized in that**
the length of each protrusion (51) is longer than the height of the bulging sections (19a-c, 21a-c), wherein said protrusions (51) are arranged to compress the material of the flat portions (9, 11) towards each other so that a plurality of seals (13) are formed that hold the two metal profiles (3, 5) together, wherein the distance between the protrusions (51) of the two opposite clad-rolling rolls (37) is between 60-80% of the original thickness of the flat portions (9, 11) resulting **in that** the thickness of the material of the flat portions (9, 11) is reduced to 20-40% of the original thickness so that said seals (13) are formed without weakening the material close to the seals (13).

2. A method according to claim 1, **characterized in that** further clad-rolled seals (13) seal at least part of the channels (7a-c).

3. A method according to claim 2, **characterized in that** the clad-rolled seals (13) extend in parallel with and along the length of the channels (7a-c).

4. A method according to claim 1, 2 or 3, **characterized in that** the method comprises feeding the metal profiles (3, 5) and clad-rolling the flat portions (9, 11) in a continuous operation.

5. A method according to any of the previous claims, **characterized in that** the method comprises transferring a second form of energy to the flat portions (9, 11) in connection with the clad-rolling of the flat portions (9, 11).

6. A method according to any of the previous claims, **characterized in that** the method comprises shaping sections of at least two metal profiles (3, 5) to bulge, in order to form channels (7a-c) from the bulging section (19a-c, 21a-c).

7. A method according to claim 6, **characterized in that** the shaping comprises rolling the metal profiles (3, 5) so that the metal profiles (3, 5) receive bulging sections (19a-c, 21a-c).

8. A method according to claim 7, **characterized in that** the metal profiles (3, 5) are shaped by rolling the metal profiles (3, 5) between a first (35) and a second shaping roll (36).

9. A method according to claim 8, **characterized in that** the first shaping roll (35) squeezes the bulging section (19a-c, 21 a-c) into a groove (50) arranged in the rolling surface of the second shaping roll (36).

10. A method according to any of the previous claims, **characterized in that** the method comprises flattening of a wall section of the channels (7a-c).

11. A method according to claim 10, **characterized in that** the flattening comprises rolling the wall section of the channels (7a-c).

12. A method according to any of the previous claims, **characterized in that** the method comprises heating the metal profiles (3, 5) to a temperature of at least 200 °C.

## Patentansprüche

1. Eine Verfahren zur Herstellung eines metallischen Rohres bestehend aus drei oder mehr Kanälen (7a-c), zur Leitung einer Flüssigkeit, wobei das Verfahren umfasst:
- Anordnung von zumindest zwei Metallprofilen (3, 5), wobei jedes Metallprofil (3, 5) eine Vielzahl von flachen Teilen (9, 11) und eine Vielzahl von gewölbten Bereichen (19a-c, 21a-c) aufweist, jeder gewölbte Bereich (19a-c, 21a-c) ragt eine bestimmte Höhe über die flachen Teile (9, 11) hinaus, sodass die flachen Teile (9, 11) eines ersten Metallprofils (3) in Richtung der flachen Teile (11) eines zweiten Metallprofils (5) gerichtet sind, und sodass die gewölbten Bereiche (19a-c, 21a-c) besagte Kanäle (7a-c) bilden, wobei die flachen Teile (9, 11) eine bestimmte ursprüngliche Dicke aufweisen,
- Einführen der zwei Metallprofile (3, 5) in eine Walzplattiermühle,
- Plattieren der flachen Teile (9,11) der beiden Metallprofile (3, 5) durch zwei gegenüber liegende Plattierwalzen (37), jede Plattierwalze (37) umfasst Kanten und Überstände (51), jeder Überstand (51) steht eine bestimmte Länge über die korrespondierende Kante,
**dadurch gekennzeichnet,**
**dass** die Länge eines jeden Überstands (51) länger ist als die Höhe der gewölbten Bereiche (19a-c), (21a-c), wobei besagte Überstände (51) derartig angeordnet sind, dass das Material der flachen Teile (9,11) zusammengedrückt wird, sodass eine Vielzahl von Dichtungen (13) geformt wird, welche die beiden Metallprofile (3, 5) zusammen halten, wobei der Abstand zwischen den Überständen (51) der beiden gegenüberliegenden Plattierwalzen (37) zwischen 60 bis 80 % der ursprünglichen Dicke der flachen Teile (9, 11) liegt, wobei dadurch die Dicke des Materials der flachen Teile (9, 11) auf 20 bis 40 % der ursprünglichen Dicke reduziert ist, sodass besagte Dichtungen (13) ohne eine Schwächung des Materials nahe der Dichtungen (13) gebildet werden.

2. Ein Verfahren nach Anspruch 1,
**dadurch gekennzeichnet,**
**dass** weitere Plattierdichtungen (13) zumindest teilweise die Kanäle (7a-c) abdichten.

3. Ein Verfahren nach Anspruch 1,
**dadurch gekennzeichnet,**
**dass** die Plattierdichtungen (13) sich parallel mit und entlang der Länge des Kanals (7a-c) erstrecken.

4. Ein Verfahren nach Anspruch 1, 2 oder 3,
**dadurch gekennzeichnet,**
**dass** das Verfahren das Einführen der Metallprofile (3, 5) und das plattieren der flachen Teile (9, 11) in einem kontinuierlichen Betrieb umfasst.

5. Ein Verfahren nach einem der vorhergehenden Ansprüche,
**dadurch gekennzeichnet,**
**dass** das Verfahren das Übertragen einer zweiten Form von Energie auf die flachen Teilen (9, 11) in Verbindung mit dem Plattieren der flachen Teile (9, 11) umfasst.

6. Ein Verfahren nach einem der vorhergehenden Ansprüche,
**dadurch gekennzeichnet,**
**dass** das Verfahren ein Formen von Bereichen von zumindest zwei Metallprofilen (3, 5) umfasst, welches diese wölbt, um Kanäle (7a-c) aus den gewölbten Bereichen (19a-c), (21a-c) zu formen.

7. Ein Verfahren nach Anspruch 6,
**dadurch gekennzeichnet,**
**dass** das Formen ein Walzen der Metallprofile (3, 5) umfasst, sodass die Metallprofile (3, 5) gewölbte Bereiche (19a-c), (21 a-c) ausformen.

8. Ein Verfahren nach Anspruch 7,
**dadurch gekennzeichnet,**
**dass** die Metallprofile (3, 5) durch Walzen der Metallprofile (3, 5) zwischen einer ersten (35) und einer zweiten Formwalze (36) geformt werden.

9. Ein Verfahren nach Anspruch 8,
**dadurch gekennzeichnet,**
**dass** die erste Formwalze (35) den gewölbten Bereich (19a-c) und (21a-c) in eine Fuge (50) quetscht, welche in der Walzoberfläche der zweiten Formwalze (36) vorgesehen ist.

10. Ein Verfahren nach einem der vorhergehenden Ansprüche,
**dadurch gekennzeichnet,**
**dass** das Verfahren ein Ausflachen des Wandbereiches des Kanals (7a-c) umfasst.

11. Ein Verfahren nach Anspruch 10,
**dadurch gekennzeichnet,**
**dass** das Ausflachen ein Walzen des Wandbereiches des Kanals (7a-c) umfasst.

12. Ein Verfahren nach einem der vorhergehenden Ansprüche,
**dadurch gekennzeichnet,**
**dass** das Verfahren ein Aufheizen der Metallprofile (3, 5) zu einer Temperatur von mindestens 200° aufweist.

## Revendications

1. Procédé de fabrication d'un tube métallique comprenant trois canaux ou plus (7a à 7c) pour la conduite d'un fluide, le procédé comprenant :
- l'agencement d'au moins deux profilés métalliques (3, 5), chaque profilé métallique (3, 5) comprenant une pluralité de parties plates (9, 11) et une pluralité de sections saillantes (19a à 19c, 21a à 21c), chaque section saillante (19a à 19c, 21a à 21c) s'étendant sur une certaine hauteur depuis les parties plates (9, 11), de telle sorte que les parties plates (9) d'un premier profilé métallique (3) soient orientées vers les parties plates (11) d'un second profilé métallique (5), et de telle sorte que les sections saillantes (19a à 19c, 21a à 21c) forment lesdits canaux (7a à 7c), les parties plates (9, 11) ayant une certaine épaisseur à l'origine,
- l'introduction des deux profilés métalliques (3, 5) dans un laminoir pour placage,
- le laminage pour placage des parties plates (9, 11) des deux profilés métalliques (3, 5) au moyen de deux rouleaux opposés de laminage pour placage (37), chaque rouleau de laminage pour placage (37) comprenant des stries et des saillies (51), chaque saillie (51) faisant saillie sur une certaine hauteur depuis la strie respective, **caractérisé en ce que** la longueur de chaque saillie (51) est plus longue que la hauteur des sections saillantes (19a à 19c, 21a à 21c), lesdites saillies (51) étant agencées pour comprimer le matériau des parties plates (9, 11) les unes vers les autres de telle sorte qu'une pluralité de joints (13) soient formés qui maintiennent les deux profilés métalliques (3, 5) ensemble, la distance entre les saillies (51) des deux rouleaux opposés de laminage pour placage (37) se situant entre 60 et 80 % de l'épaisseur d'origine des parties plates (9, 11), ce qui entraîne une réduction de l'épaisseur du matériau des parties plates (9, 11) à 20 à 40 % de l'épaisseur d'origine de telle sorte que lesdits joints (13) soient formés sans affaiblir le matériau situé près des joints (13).

2. Procédé selon la revendication 1, **caractérisé en ce que** d'autres joints laminés et plaqués (13) ferment hermétiquement au moins une partie des canaux (7a à 7c).

3. Procédé selon la revendication 2, **caractérisé en ce que** les joints laminées et plaqués (13) s'étendent de marnière parallèle à la longueur des canaux (7a à 7c) et le long de ces derniers.

4. Procédé selon à revendication 1, 2 ou 3, **caractérisé en ce que** le procédé comprend l'introduction des profilés métalliques (3, 5) et le laminage pour placage des parties plates (9, 11) en une opération continue.

5. Procédé selon l'une quelconque des revendications précédents, **caractérisé en ce que** le procédé comprend le transfert d'une seconde forme d'énergie aux parties plates (9, 11) dans le cadre du laminage pour placage des parties plates (9, 11).

6. Procédé selon l'une quelconque des revendications précédentes, **caractérisé en ce que** le procédé comprend le façonnage de sections d'au moins deux profilés métalliques (3, 5) pour qu'elles fassent saillie, afin de former des canaux (7a à 7c) à partir de la section saillante (19a à 19c, 21a à 21c).

7. Procédé selon la revendication 6, **caractérisé en ce que** le façonnage comprend le laminage des profilés métalliques (3, 5) de telle sorte que les profilés métalliques (3, 5) reçoivent les sections saillantes (19a à 19c, 21a à 21c).

8. Procédé selon la revendication 7, **caractérisé en ce que** les profilés métalliques (3, 5) sont façonnés par laminage des profilés métalliques (3, 5) entre un premier (35) et un second rouleau de façonnage (36).

9. Procédé selon la revendication 8, **caractérisé en ce que** le premier rouleau de façonnage (35) presse la section saillante (19a à 19c, 21a à 21c) dans une rainure (50) disposée sur la surface de laminage du second rouleau de façonnage (36).

10. Procédé selon l'une quelconque des revendications précédentes, **caractérisé en ce que** le procédé comprend l'aplatissement d'une section de paroi des canaux (7a à 7c).

11. Procédé selon la revendication 10, **caractérisé en ce que** l'aplatissement comprend le laminage de la section de paroi des canaux (7a à 7c).

12. Procédé selon l'une quelconque des revendications précédentes, **caractérisé en ce que** le procédé comprend le chauffage des profilés métalliques (3, 5) à une température d'au moins 200 °C.
